# EUROPEAN PATENT APPLICATION

(11) **EP 4 523 860 A1**
(43) Date of publication of application: **19.03.2025**
(21) Application number: 24184537.9
(22) Date of filing: 26.06.2024
(51) Int. Cl.: B25J 5/02, B05B 13/04, B25J 11/00, B25J 17/02, B25J 18/00, B25J 19/00

(54) **ROBOT**

(30) Priority: 14.09.2023 JP 2023149295
(71) Applicant: KAWASAKI JUKOGYO KABUSHIKI KAISHA, Kobe-shi, Hyogo 650-8670 (JP)
(72) Inventor: YONEYAMA, Masato, Kobe-shi, 650-8670 (JP); TANIUCHI, Ryo, Kobe-shi, 650-8670 (JP)
(74) Representative: Müller-Boré & Partner Patentanwälte PartG mbB

(57) **Abstract**

A robot (100) according to this disclosure includes a vertical multi-joint robot arm (10) including a plurality of joints (41, 42, 43, 44, 45, 46) each of which rotates about a rotation axis; and a tube (30) including at least one of an electric cable and a fluid hose. The tube (30) overlaps a circular area(s) (42r, 43r) that centers/center the rotation axis/axes of the predetermined joint(s) and has/have a radius(radii) of a distance(s) between the rotation axis/axes of the predetermined joint(s) and an exterior surface(s) of the predetermined joint(s) (42, 43) as viewed in an extension direction(s) of the rotation axis/axes, arranged inside an exterior shape(s) of the predetermined joint(s) (42, 43) as viewed in a direction orthogonal to the rotation axis/axes of the predetermined joint(s).

## Description

### BACKGROUND OF THE INVENTION

### Field of the Invention

The present disclosure relates to a robot.

### Description of the Background Art

Robots including cables are known in the art. For example, Japanese Patent Laid-Open Publication No. JP2015-13343 discloses a robot including drive cables including a power cable that supplies electric power to an electric motor that drives an arm, and a signal cable that transmits and receives signals. In the robot disclosed in the above Japanese Patent Laid-Open Publication No. JP2015-13343, the drive cable extends along an exterior surface of the robot.

However, in a case in which a tube such as a cable extends along the exterior surface of the robot as in the robot disclosed in the above Japanese Patent Laid-Open Publication No. JP2015-13343, it is necessary to operate the robot in consideration of interference of the tube with an object such as a workpiece arranged around the robot. For this reason, it is necessary to provide a large installation area for the robot in consideration of the interference of the tube, and as a result the installation area for the robot cannot be small in the case the tube extends along the exterior surface of the robot.

### SUMMARY OF THE INVENTION

The present disclosure is intended to solve the above problem, and one object of the present disclosure is to provide a robot capable of reducing an installation area for the robot.

A robot according to one aspect of the present disclosure includes a vertical multi-joint robot arm including a plurality of joints each of which rotates about a rotation axis; and a tube overlapping a circular area(s) in at least one of the plurality of joints as a predetermined joint(s) that centers/center the rotation axis/axes of the predetermined joint(s) and has/have a radius(radii) of a distance(s) between the rotation axis/axes of the predetermined joint(s) and an exterior surface(s) of the predetermined joint(s) as viewed in an extension direction(s) of the rotation axis/axes, arranged inside an exterior shape(s) of the predetermined joint(s) as viewed in a direction orthogonal to the rotation axis/axes of the predetermined joint(s), and including at least one of an electric cable and a fluid hose.

In the robot according to the one aspect of the present disclosure, as discussed above, a tube overlapping a circular area(s) in at least one of the plurality of joints as a predetermined joint(s) that centers/center the rotation axis/axes of the predetermined joint(s) and has/have a radius(radii) of a distance(s) between the rotation axis/axes of the predetermined joint(s) and an exterior surface(s) of the predetermined joint(s) as viewed in an extension direction(s) of the rotation axis/axes, arranged inside an exterior shape(s) of the predetermined joint(s) as viewed in a direction orthogonal to the rotation axis/axes of the predetermined joint(s), and including at least one of an electrical cable and a fluid hose is provided. Accordingly, it is possible to prevent interference of the tube with a surrounding object caused by operation of the robot arm dissimilar to a case in which the tube extends along the exterior surface of the joint. Consequently, because the robot can be installed without consideration of interference of the tube, an installation area for the robot can be reduced.

According to the present disclosure, it is possible to reduce an installation area for a robot.

### BRIEF DESCRIPTION OF THE DRAWINGS

FIG. 1 is a perspective view showing an entire configuration of a robot according to one embodiment.
FIG. 2 is a schematic diagram showing an exemplary arrangement of the robot arrangement in a painting booth.
FIG. 3 is a side view showing the robot as viewed in an X direction of FIG. 1.
FIG. 4 is a block diagram showing a control configuration of the robot.
FIG. 5 is a view showing the robot arm as viewed from a bottom side.
FIG. 6 shows a side view showing the robot arm in an exemplary extending posture.
FIG. 7 is a view illustrating an arrangement of an upward/downward mover according to a first modified embodiment of the present disclosure.
FIG. 8 is a side view showing a robot arm in a second modified embodiment of the present disclosure.

### DESCRIPTION OF THE PREFERRED EMBODIMENT

The following description will describe one embodiment embodying the present disclosure with reference to the drawings.

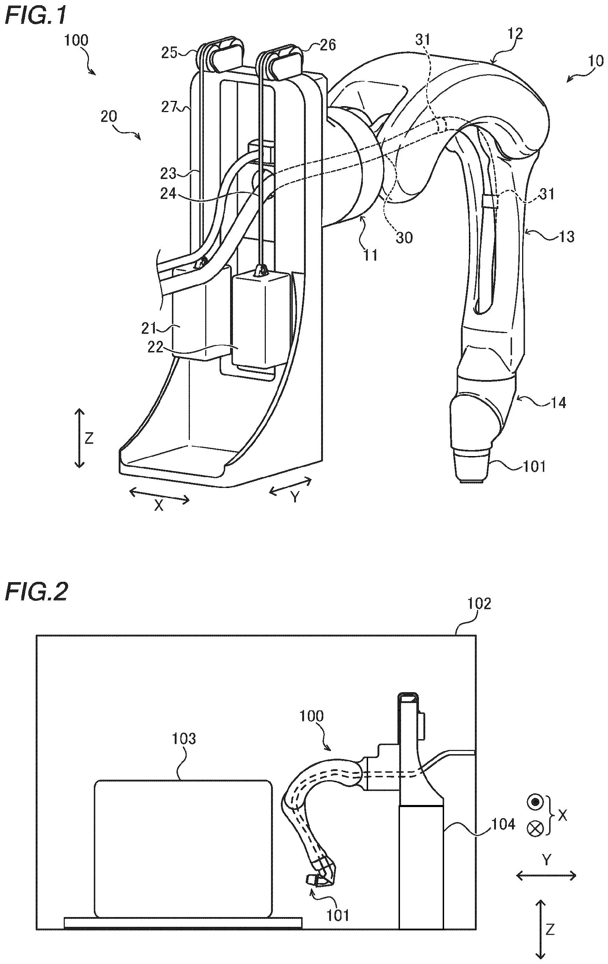

The following description describes a configuration of a robot 100 according to an embodiment with reference to FIGS. 1 to 6.

### (Configuration of Robot)

As shown in FIG. 1, the robot 100 includes a robot arm 10, an upward/downward mover 20, and a tube 30. The robot 100 is an industrial painting robot for painting, for example. The robot arm 10 has a distal end part to which a painting gun 101 for spraying paint is attached as an end effector. The painting gun 101 includes an electrostatic bell, for example. In FIGS. 1 to 6, a vertical direction is defined as a Z direction, and directions orthogonal to each other in a horizontal plane orthogonal to the Z-direction are defined as X and Y directions. The upward/downward mover 20 moves the robot arm 10 upward/downward in the Z direction.

As shown in FIG. 2, the robot 100 is arranged on an upper part, which is positioned on a top side in the Z direction as the vertical direction, of a columnar-shaped mount 104 in a painting booth 102. For example, in the painting booth 102, the robot 100 paints a workpiece 103 conveyed by a conveying apparatus such as a belt conveyor. The workpiece 103 as an object to be painted is a part of a vehicle, for example. The painting booth 102 includes a reclamation mechanism that suppresses scattering of paint sprayed by the painting gun 101, and reclaims the paint that has not been applied onto the workpiece 103. In addition, in the painting booth 102, in a case in which the workpieces 103 are conveyed in the X direction, for example, a plurality of robots 100 can be aligned in the X direction.

As shown in FIG. 1, the robot arm 10 includes a base part 11, a lower arm part 12, an upper arm part 13, and a wrist 14. The base part 11, the lower arm part 12, the upper arm part 13, and the wrist 14 are connected to each other in this order in the robot arm 10. The "proximal end (part)" refers to an end on a base side in both ends of the robot arm 10, and the "distal end (part)" refers to an end on a side to which the painting gun 101 is attached as the end effector in the both ends of the robot arm 10. The base part 11 is arranged in the proximal end part of the robot arm 10. The lower arm part 12 and the upper arm part 13 have an elongated rod-like shape extending from their proximal end to their distal end. The robot arm 10 is connected to the upward/downward mover 20. The base part 11 of the robot arm 10 is connected to the upward/downward mover 20. The base part 11 is connected to the proximal end of the lower arm part 12 opposite to the upper arm part 13. The distal end side of the lower arm part 12 is connected to the upper arm part 13. The proximal end of the upper arm part 13 is connected to the lower arm part 12, and the distal end of the upper arm part is connected to the wrist 14. The painting gun 101 is attached as the end effector to a distal end of the wrist 14.

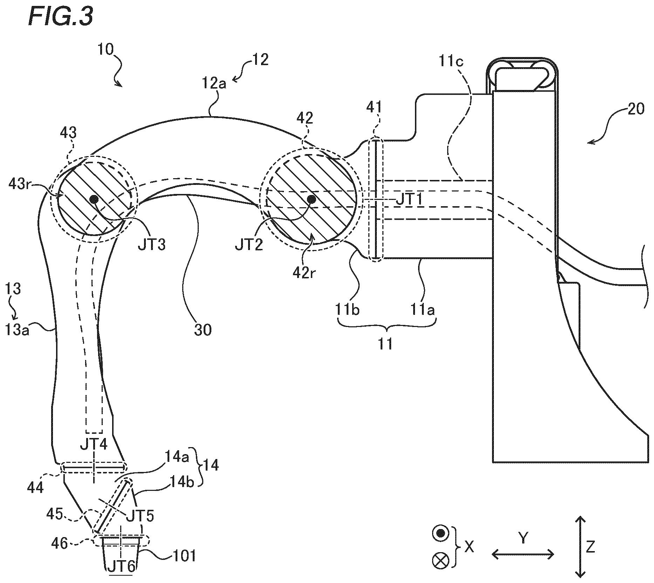

As shown in FIG. 3, the robot arm 10 is a 6-axis vertical multi-joint robot arm including a plurality of joints 41, 42, 43, 44, 45, and 46. Also, the robot arm 10 includes a plurality of links 11a, 11b, 12a, 13a, 14a, and 14b. The base part 11 includes two links 11a and 11b.
The lower arm part 12 includes one link 12a. The upper arm part 13 includes one link 13a. The wrist 14 includes two links 14a and 14b. The six joints 41, 42, 43, 44, 45 and 46 connect the plurality of links 11a, 11b, 12a, 13a, 14a and 14b, and the painting gun 101, which is connected to the distal end of the robot arm 10, to each other, and can rotate about their rotation axes. Specifically, the joints 41, 42, 43, 44, 45, and 46 can rotate about a JT1 axis, a JT2 axis, a JT3 axis, a JT4 axis, a JT5 axis, and a JT6 axis, respectively. The joint 42 and the joint 43 are examples of the predetermined joints.

The robot arm 10 is orientated in a direction orthogonal to an upward/downward movement direction of the upward/downward mover 20, which is the Z direction. The robot arm 10 extends in the Y direction relative to the upward/downward mover 20. Specifically, the link 11a of the base part 11 is connected to the upward/downward mover 20, and the link 11b rotates about the JT1 axis relative to the link 11a so that the base part 11 rotates about the JT1 axis relative to the upward/downward mover 20. The JT1 axis extends in the Y direction of FIG. 3. In the lower arm part 12, a proximal end of the link 12a is connected to the link 11b of the base part 11, and rotates about the JT2 axis. The JT2 axis extends in a direction orthogonal to the JT1 axis. The JT2 axis extends in the X direction of FIG. 3. The link 12a extends in a direction orthogonal to the JT2 axis. The link 13a of the upper arm part 13 is connected to a distal end of the link 12a, and rotates about the JT3 axis. The JT3 axis is parallel to the JT2 axis, and extends in the X direction of FIG. 3. The upper arm part 13 extends in a direction orthogonal to the JT3 axis. In the wrist 14, the link 14a is connected to the link 13a, and rotates about the JT4 axis. The link 14b is connected to the link 14a, and rotates about the JT5 axis. The JT4 axis is orthogonal to the JT3 axis, and extends in an extension direction of the upper arm part 13. The JT5 axis intersects the JT4 axis. The painting gun 101, which is the end effector, is attached to a distal end of the wrist 14, and rotates about the JT6 axis relative to the link 14b. The JT6 axis intersects the JT5 axis.

As shown in FIG. 1, the upward/downward mover 20 is arranged in the proximal end part of the robot arm 10. The upward/downward mover 20 is connected to the base part 11 of the robot arm 10, and is arranged on a side opposite to the lower arm part 12 with respect to the base part 11. Specifically, the lower arm part 12 is arranged on one side of the base part 11 in the Y direction, and the upward/downward mover 20 is arranged on another side of the base part in the Y direction opposite to the lower arm part 12. The upward/downward mover 20 includes a pair of counterweights 21 and 22, wires 23 and 24, pulleys 25 and 26, and a support 27. The pair of counterweights 21 and 22 are arranged adjacent to each other in the X direction. The pair of counterweights 21 and 22 are connected to the robot arm 10 by wires 23 and 24, respectively. Specifically, the wire 23 extends along a plate-shaped part of the support 27 lying an XZ plane, and is hung on the pulley 25 arranged in an upper part of the support 27. One end of the wire 23 is fastened to the counterweight 21, and another end is fastened to the base part 11 of the robot arm 10. The wire 24 extends along another plate-shaped part of the support 27, and is hung on the pulley 26 arranged in the upper part of the support 27; one end of the wire is fastened to the counterweight 22, and another end is fastened to the base part 11 of the robot arm 10. The upward/downward mover 20 moves the base part 11 along the support 27 in the Z direction. The support 27 has a hole through which the tube 30 passes in a central part in the X direction.

The tube 30 includes at least one of an electric cable and a fluid hose. In this embodiment, the robot 100 includes a plurality of flexible tubes 30. For example, the plurality of tubes 30 include a power cable as a driving source for supplying electric power for driving operations of the robot arm 10 and the painting gun 101, and electric cables including a signal cable for transmitting signals for controlling the operations.
Also, the plurality of tubes 30 include a painting hose as a fluid hose for supplying the paint to the painting gun 101, and an air hose as a fluid hose for supplying air to the painting gun 101. The tube 30 can include two or more painting hose for painting the workpiece in two or more colors. Also, the tube 30 can include two or more air hoses. The robot 100 also includes a tie 31. The tie 31 bundles the plurality of tubes 30. The tie 31 is attached to the robot arm 10, and includes a flexible band, a mechanical clamp, or the like, for example. Note that one tube 30 is shown with the plurality of tubes 30 being bundled in FIG. 1. An arrangement of the tube 30 is described in detail later.

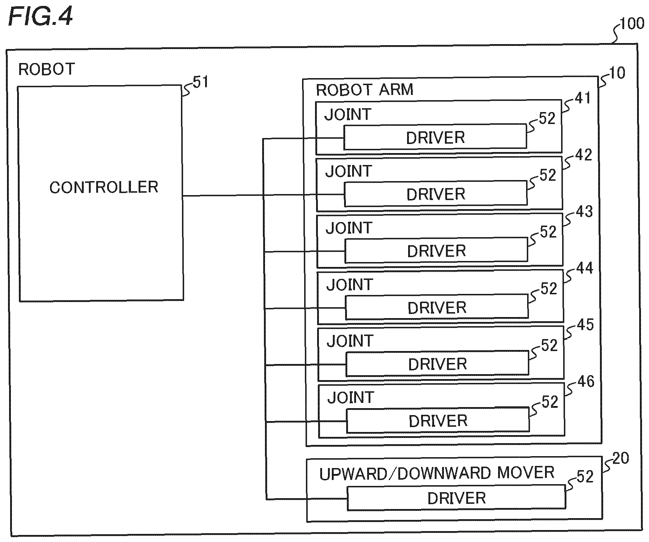

As shown in FIG. 4, the robot 100 has a controller 51 and drivers 52. For example, the controller 51 includes an arithmetic unit such as central processing unit (CPU). The controller 51 is a robot controller that controls the operation of the robot 100. In the controller 51, a storage such as a hard disk drive is included, and the arithmetic unit executes control processing based on a program and parameters stored in the storage. Also, the drivers 52 include servomotors as driving sources for operating the robot arm 10 and the upward/downward mover 20. The driver 52 is provided as the driving source for operating the robot arm 10 to corresponding one of the plurality of joints 41, 42, 43, 44, 45, and 46. Also, the driver 52 is provided as the driving source for moving the robot arm 10 upward/downward to the upward/downward mover 20. The controller 51 includes a main CPU that controls the entire operation of the robot 100, and a servo CPU that controls electric power supplied to the drivers 52 of the six joints 41, 42, 43, 44, 45, and 46, and the driver 52 of the upward/downward mover 20 based on commands from the main CPU, for example. In the driver 52, a rotating shaft of the servomotor is rotated by three-phase alternating current supplied from the controller 51. The plurality of joints 41, 42, 43, 44, 45, and 46 rotate in response to rotation of the rotating shafts of the servomotors of the drivers 52 in the robot arm 10 so that the robot arm 10 operates. Also, the robot arm 10 is moved upward/downward by the upward/downward mover 20 in response to rotation the rotating shaft of the servomotor of the driver 52 of the upward/downward mover 20.

### (Detailed Arrangement of Tube)

In this embodiment, as shown in FIG. 1, the tube 30 extends from the proximal end part of the robot arm 10, which is a common part to the upward/downward mover 20, along the robot arm 10. The tube 30 is arranged between the pair of counterweights 21 and 22 in the upward/downward mover 20, and extends from the upward/downward mover 20 to the robot arm 10. The tube 30 linearly passes through the base part 11 from one side to another side of the base part.

As shown in FIG. 3, the base part 11 has a through hole 11c that linearly penetrates the base part, and extends in the Y direction from one side to another side in the Y direction. The JT1 axis, which is the rotation axis of the joint 41, passes through the through-hole 11c. That is, a part of the joint 41 corresponding to the rotation axis is hollow. The tube 30 is arranged in the through hole 11c in the joint 41. Accordingly, the tube extends from the upward/downward mover 20 through the base part 11 and the lower arm part 12 to the upper arm part 13 in one direction.

In this embodiment, the tube 30 is accommodated in one pair of adjacent joints 42 and 43 that are arranged in both end parts of the lower arm part 12 in interiors of the joints 42 and 43 in the plurality of joints 41, 42, 43, 44, 45 and 46. The tube 30 overlaps circular areas 42r and 43r in the joints 42 and 43 that center the rotation axes of the joints 42 and 43 and have radii of distances between the rotation axes of the joints 42 and 43, and exterior surfaces of the joints 42 and 43 as viewed in extension directions of the rotation axes, and is arranged inside the exterior shapes of the joints 42 and 43 as viewed in a direction perpendicular to the rotation axes of the joints 42 and 43. Specifically, in the joint 42, the tube 30 overlaps the circular area 42r, which centers the JT2 axis as the rotation axis of the joints 42 and has the radius of the distance between the JT2 axis and the exterior surface of the joint 42, as viewed in the X direction, which is the extension direction of the JT2 axis as the rotation axis of the joint 42. The circular area 42r is shown by a hatched area in FIG. 3. Also, in the joint 43, the tube 30 overlaps the circular area 43r, which centers the JT3 axis as the rotation axis of the joints 43 and has the radius of the distance between the JT3 axis and the exterior surface of the joint 43, as viewed in the X direction, which is the extension direction of the JT3 axis as the rotation axis of the joint 43. The circular area 43r is shown by another hatched area in FIG. 3. For example, the tube 30 is arranged to overlap a rotational driving mechanism such as a speed reducer, a bearing unit, or the like, in each of the circular areas 42r and 43r as viewed in the X direction. In the joints 42 and 43, the tube 30 is arranged inside an exterior shape of the robot arm 10 as viewed in the X direction. In other words, the tube 30 is arranged in an interior of the link 12a in the both end parts of the link 12a of the lower arm part 12.

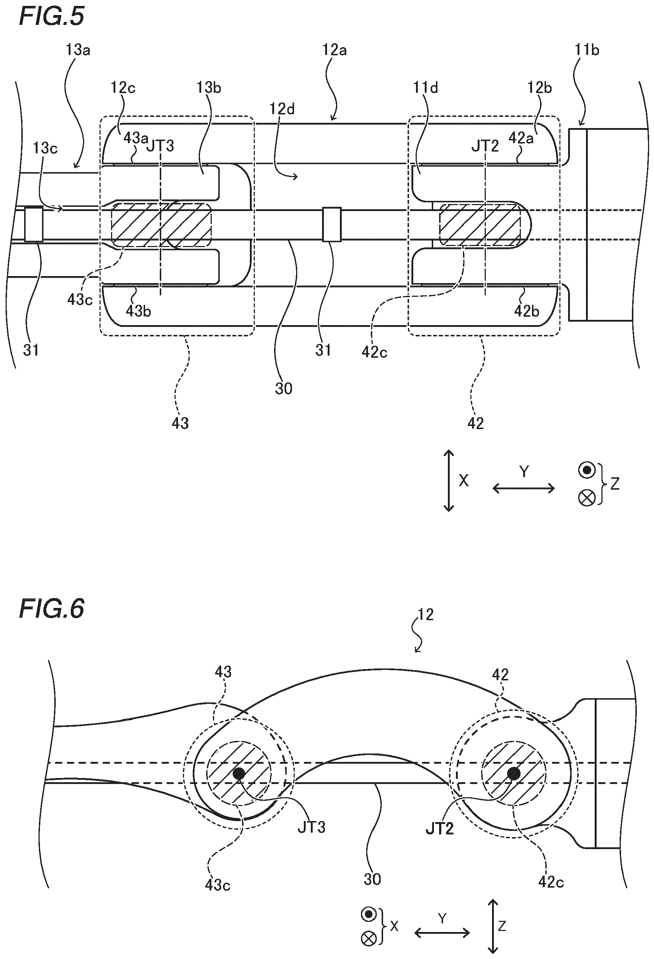

As shown in FIG. 5, in the joint 42, the tube 30 is arranged inside the exterior shape of the joint 42 as viewed in the Z direction, which is orthogonal to the JT2 axis of the rotation axis of the joint 42. Specifically, in the base part 11 of the robot arm 10, a U-shaped end part 11d of the link 11b has forked ends, which are separated from each other as viewed in the Z direction. Also, a proximal-end-side U-shaped end part 12b of the link 12a of the lower arm part 12 has forked ends, which are separated from each other as viewed in the Z direction. In the joint 42, the end part 11d and the end part 12b are connected to each other. Specifically, the joint 42 includes a pair of connectors 42a and 42b, which face each other in a direction of the JT2 axis, formed by connecting the U-shaped end parts 11d and 12b of the pair of links 11b and 12a. The tube 30 is arranged between the pair of connectors 42a and 42b in the joint 42. In other words, the joint 42 has a tube-receiving area 42c caused to receive the tube 30 between the connectors 42a and 42b inside the exterior shape of the joint 42 as viewed in the direction orthogonal to the JT2 axis as the rotation axis by operation of the robot arm 10. In the joint 42, the end part 11d of the link 11b of the base part 11 is arranged inside the end part 12b of the link 12a of the lower arm part 12. The tube-receiving area 42c in the joint 42 is an area arranged further inside the end part 12b, which is arranged inside the end part 12b. The tube 30 extends in a central part in the X direction as a width direction of the joint 42, which is the extension direction of the JT2 axis, inside the exterior shape of the joint 42. The joint 42 is a bifurcated joint formed by a pair of connectors 42a and 42b.

Similar to the joint 42, in the joint 43, the tube 30 is arranged inside the exterior shape of the joint 43 as viewed in the Z direction, which is orthogonal to the JT3 axis of the rotation axis of the joint 43. A distal-end-side U-shaped end part 12c of the link 12a of the lower arm part 12, and a proximal-end-side U-shaped end part 13b of the link 13a of the upper arm part 13 of the robot arm 10 also have forked ends, which are separated from each other as viewed in the Z direction. The joint 43 includes a pair of connectors 43a and 43b, which face each other in a direction of the JT3 axis, formed by connecting the U-shaped end parts 12c and 13b of the pair of links 12a and 13a. The tube 30 is arranged between the pair of connectors 43a and 43b in the joint 43. The joint 43 has a tube-receiving area 43c caused to receive the tube 30 between the connectors 43a and 43b inside the exterior shape of the joint 43 as viewed in the direction orthogonal to the JT3 axis as the rotation axis by operation of the robot arm 10. In the joint 43, the end part 13b of the link 13a of the upper arm part 13 is arranged inside the end part 12c of the link 12a of the lower arm part 12, and the tube-receiving area 43c in the joint 43 is an area arranged further inside the end part 13b, which is arranged inside the end part 13b. Similar to the joint 42, the tube 30 extends in a central part in the X direction as a width direction of the joint 43, which is the extension direction of the JT3 axis, inside the exterior shape of the joint 43. Similar to the joint 42, the joint 43 is a bifurcated joint formed by a pair of connectors 43a and 43b.

As shown in FIG. 6, the tube-receiving area 42c for the tube 30 inside the joint 42 includes a position that overlaps the center of the JT2 axis as viewed in the X direction, which is the extension direction of the JT2 axis as the rotation axis of the joint 42. Also, in the joint 43, the tube-receiving area 43c for the tube 30 inside the joint 43 includes a position that overlaps the center of the JT3 axis as viewed in the X direction, which is the extension direction of the JT3 axis as the rotation axis of the joint 43. The lower arm part 12 has a curved arch shape. The tube 30 is passes through the tube-receiving area 42c of the joint 42 and the tube-receiving area 43c of the joint 43, which are located in the both end parts of the lower arm part 12 having curved arch shape. In a case in which the robot arm 10 is moved so that the lower arm part 12 and the upper arm part 13 extend relative to each other, the lower arm part 12 having the arch shape is curved to leave from the tube 30 so that the tube 30 extends from the joint 41 through the joint 42 to the joint 43 in a straight line. In this case, the tube 30 is positioned to overlap both the center of the JT2 axis and the center of the JT3 axis as viewed in the X direction.

In this embodiment, as shown in FIG. 5, the tube 30 is arranged in an interior of the robot arm 10 in a width direction in at least a part of the robot arm 10. Specifically, the lower arm part 12 and the upper arm part 13 have a recessed part 12d and a recessed part 13c, respectively, in which the tube 30 is arranged. The recessed part 12d and the recessed part 13c are formed on a lower side of the robot arm 10, and extend along the robot arm 10. In other words, the recessed part 12d and the recessed part 13c of the lower arm part 12 and the upper arm part 13 are grooves opened downward and having U shapes as viewed in a cross section. The tie 31 is attached to the recessed part 12d and the recessed part 13c of the lower arm part 12 and the upper arm part 13 by fasteners such as screws. The tube 30 is arranged inside the upper arm part 13 in a distal end part of the upper arm part 13, extends from the interior of the upper arm part 13 through an interior of the wrist 14, and is connected to the painting gun 101.

### (Advantages of the Embodiment)

A robot 100 includes a tube 30 overlapping circular areas 42r and 43r in the joints 42 and 43 as at least one of the plurality of joints 41, 42, 43, 44, 45, 46 as joints 42 and 43 that center the rotation axes of the joints and have radii of distances between the rotation axes of the joints, and exterior surfaces of the joints 42 and 43 as viewed in an extension directions of the rotation axes, arranged inside exterior shapes of the joints as viewed in a direction orthogonal to the rotation axes of the joints, and including at least one of an electric cable and a fluid hose. Accordingly, it is possible to prevent interference of the tube 30 with a surrounding object caused by operation of the robot 100 dissimilar to a case in which the tube 30 extends along the exterior surfaces of the joints 42 and 43. Consequently, because the robot 100 can be installed without consideration of interference of the tube 30, an installation area for the robot 100 can be reduced.

The joint 42 as the predetermined joint includes a tube-receiving area 42c including a position that overlaps the center of the rotation axis as viewed in the extension direction of the rotation axis and being caused to receive the tube 30 by operation of the robot arm 10 within an area of the exterior shape of the joint 42 as viewed in the direction orthogonal to the rotation axis of the joint. Also, the joint 43 as the predetermined joint includes a tube-receiving area 43c including position that overlaps the center of the rotation axis as viewed in the extension direction of the rotation axis and being caused to receive the tube 30 by operation of the robot arm 10 within an area of the exterior shape of the joint 43 as viewed in the direction orthogonal to the rotation axis of the joint. Accordingly, because the tube-receiving areas 42c and 43c include positions that overlap the centers of the rotation axes so that the tube 30 is received at positions that makes the tube 30 overlap the centers of the rotation axes caused by operation of the robot arm 10, it is possible to prevent a too much sag of the tube 30 caused by operation of the robot arm 10 as compared with a case in which the tube 30 is not arranged at positions that overlap the centers of the rotation axes. Consequently, because interference of the tube 30 with a surrounding object can be further prevented, it is possible to further reduce an installation area for the robot 100.

The joint 42 as the predetermined joint includes a pair of connectors 42a and 42b facing each other in a direction of the rotation axis of the predetermined joint. The joint 43 as the predetermined joint includes a pair of connectors 43a and 43b facing each other in a direction of the rotation axis of the predetermined joint. The tube 30 is arranged between the pair of connectors 42a and 42b in the joint 42, and between a pair of connections 43a and 43b in the joint 43. Accordingly, because the tube 30 is arranged between the pair of connectors 42a and 42b, the tube 30 can be easily arranged in an interior of in the joint 42, and because the tube 30 is arranged between the pair of connectors 43a and 43b, the tube 30 can be easily arranged in an interior of in the joint 43. Consequently, it is possible to easily reduce an installation area for the robot 100.

The robot arm 10 includes a pair of links 11b and 12a including forked end parts 11d and 12b each of which has a U shape. The joint 42 as the predetermined joint includes the pair of connectors 42a and 42b, which face each other in a direction of the rotation axis, formed by connecting the U-shaped end parts 11d and 12b of the pair of links 11b and 12a. Also, the robot arm 10 includes a pair of links 12a and 13a including forked end parts 12c and 13b each of which has a U shape. The joint 43 as the predetermined joint includes the pair of connectors 43a and 43b, which face each other in a direction of the rotation axis, formed by connecting the U-shaped end parts 12c and 13b of the pair of links 12a and 13a. Accordingly, because the pair of connectors 42a and 42b in which the U-shaped end parts 11d and 12b are connected to each other are arranged in the joint 42, and the pair of connectors 43a and 43b in which the U-shaped end parts 12c and 13b are connected to each other are arranged in the joint 43, it is possible to prevent reduction of strength of the joints 42 and 43 even in a case in which the tube 30 is arranged in interiors of the joints as compared with a case in which one connector is arranged in each joint. Consequently, it is possible to reduce an installation area for the robot 100 while preventing reduction of strength of the robot arm 10.

The tube 30 is arranged in an interior of the robot arm 10 in a width direction in at least a part of the robot arm 10. Accordingly, because the tube 30 is arranged in the interior of the robot arm 10 in the width direction in the robot arm 10, it is possible to prevent interference of the tube 30 with a surrounding object in parts other than the joint 42 and 43 as the predetermined joints. Consequently, it is possible to further reduce an installation area for the robot 100.

The robot 100 includes a plurality of tubes 30. Also, the robot 100 includes a tie 31 that bundles the plurality of tubes 30. Because the plurality of tubes 30 can be prevented from coming apart due to operation of the robot arm 10, it is possible to further reduce an installation area for the robot 100. Consequently, the installation area for the robot 100 can be further reduced by arranging the plurality of tubes 30, which is bundled by the tie 31, in the interiors of the joints 42 and 43 as the predetermined joints.

The robot 100 includes the joints 42 and 43 as one pair of predetermined joints that are adjacent to each other in the plurality of joints 41, 42, 43, 44, 45, and 46. The tube 30 overlaps the circular areas 42r and 43r in the one pair of predetermined joints 42 and 43, which are adjacent to each other, as viewed in the extension directions of the rotation axes, and is arranged inside the exterior shapes of the joints 42 and 43 as viewed in the direction orthogonal to the rotation axes. Because the tube 30 can be arranged in both the interiors of the joints 42 and 43 adjacent to each other, it is possible to further prevent a sag of the tube 30 outward of the exterior shape of the robot arm 10 caused by operation of the robot arm 10 as compared with a case in which the tube 30 is arranged in only one of the interiors of the joints 42 and 43 adjacent to each other. Consequently, the installation area for the robot 100 can be further reduced by arranging the tube 30 in both the interiors of one pair of the joints 42 and 43 adjacent to each other.

The robot arm 10 includes the lower arm part 12 arranged in a proximal end part of the robot arm, and the upper arm part 13 connected to the lower arm part 12 and arranged in a distal end part of the robot arm. The joints 42 and 43 as the predetermined joints are arranged in both end parts of the lower arm part 12 in the plurality of joints 41, 42, 43, 44, 45 and 46. Accordingly, in a case in which the tube 30 extends along the lower arm part 12, it is possible to prevent a sag of the tube 30 outward of the exterior shape of the lower arm part 12 caused by operation of the lower arm part 12. Consequently, because interference of the tube 30, which extends along the lower arm part 12, with an object surrounding the lower arm part 12 caused by operation of the lower arm part 12 can be further prevented, it is possible to further reduce an installation area for the robot 100.

The lower arm part 12 has a curved arch shape. The tube 30 passes through the joints 42 and 43 as predetermined joints, which are arranged in the both end parts of the lower arm part 12 having the curved arch shape. Because the lower arm part 12 has a curved arch shape, in a case in which the tube 30 passes through the joints 42 and 43, which are arranged in the both end parts of the lower arm part 12, the lower arm part 12 can be arranged away from the tube 30. Because the tube 30 can extend in a straight line from the proximal end to the distal end of the lower arm part 12, it is possible to further prevent a sag of the tube 30. Consequently, it is possible to still further reduce an installation area for the robot 100.

The robot arm 10 includes the lower arm part 12 arranged in the proximal end part of the robot arm, the upper arm part 13 connected to the lower arm part 12 and arranged in the distal end part of the robot arm, and a base part 11 connected to a proximal end part of the lower arm part 12 opposite to the upper arm part 13. The tube 30 linearly passes through the base part 11 from one side to another side of the base part. Because tube 30 linearly passes through the base part 11 from one side to another side of the base part, it is possible to prevent arrangement of the tube 30 in the base part 11 from becoming complicated as compared with a case in which the tube 30 is curved when the tube is arranged in the base part 11.

The robot 100 includes an upward/downward mover 20 that moves the robot arm 10 upward/downward. The upward/downward mover 20 is arranged in the proximal end part of the robot arm 10. The tube 30 extends from the proximal end part of the robot arm 10, which is a common part to the upward/downward mover 20, along the robot arm 10. Accordingly, the robot arm 10, and the tube 30, which extends along the robot arm 10, can be moved together upward/downward by the upward/downward mover 20. Because a mechanism for assisting the movement of the tube 30 is not required dissimilar to a case in which the upward/downward mover 20 and the tube 30 are spaced away from each other, it is possible to prevent the configuration of the robot 100 from becoming complicated, and to reduce an installation area for the robot 100. Also, because the robot arm 10 can be moved upward/downward by the upward/downward mover 20, an operating range of the upward/downward mover 20 can be added to an operating range that is provided only by the robot arm 10. Consequently, the operating range of the entire robot 100 can be increased by the upward/downward mover 20 even in a case in which the installation area for the robot arm 10 is reduced. Consequently, it is possible to prevent reduction of the operating range of the robot 100 while reducing the installation area for the robot 100.

The robot 100 includes an upward/downward mover 20 that moves the robot arm 10 upward/downward. The upward/downward mover 20 includes counterweights 21 and 22 connected to the robot arm 10 by wires 23 and 24. Because a weight of the robot arm 10 can be supported by the counterweights 21 and 22, it is possible to reduce power consumption of the upward/downward mover 20 provided to the robot. Consequently, it is possible to prevent increase of power consumption due to the prevention of the reduction of the operating range of the robot 100 by using the upward/downward mover 20 while reducing the installation area for the robot 100.

The robot arm 10 includes the lower arm part 12 arranged in the proximal end part of the robot arm, the upper arm part 13 connected to the lower arm part 12 and arranged in the distal end part of the robot arm, and a base part 11 connected to a proximal end part of the lower arm part 12 opposite to the upper arm part 13. The robot arm 10 is orientated in a direction orthogonal to an upward/downward movement direction of the upward/downward mover 20. The upward/downward mover 20 is arranged on a side opposite to the lower arm part 12 with respect to the base part 11. Accordingly, the tube can extend from the upward/downward mover 20 through the base part 11 and the lower arm part 12 to the upper arm part 13 in one direction. As a result, in a case in which a plurality of robots 100 are aligned side by side, it possible to reduce a distance between robots 100 adjacent to each other. Consequently, even in a case in which a plurality of robots 100 are aligned side by side, it is possible to reduce installation areas for the plurality of robots 100.

The upward/downward mover 20 includes a pair of counterweights 21 and 22 connected to the robot arm 10 by wires 23 and 24. The tube 30 is arranged between the pair of counterweights 21 and 22, and extends from the upward/downward mover 20 to the robot arm 10. Accordingly, even in a case in which the upward/downward mover 20, the base part 11, the lower arm part 12, and the upper arm part 13 are aligned in one direction, because the tube 30 is arranged between the pair of counterweights 21 and 22, and extends from the upward/downward mover to the robot arm, increase of power consumption can be suppressed by the counterweights 21 and 22 while reducing installation areas for the plurality of robots 100.

The robot arm 10 has a distal end part to which a painting gun 101 for spraying paint is attached as an end effector. The tube 30 includes a painting hose as the fluid hose for supplying the paint to the painting gun 101. Accordingly, even in a case in which the workpiece 103 as a subject to be painted, and the robot 100 are placed in the painting booth 102, because the tube 30 for supplying the paint passes through the interiors of the joints 42 and 43 as the predetermined joints, it is possible to reduce an installation area for the robot 100 in the painting booth 102. Consequently, it is possible to reduce the painting booth 102 itself in which the workpiece 103 is painted.

### Modified Embodiments

Note that the embodiment disclosed this time must be considered as illustrative in all points and not restrictive. The scope of the present disclosure is not shown by the above description of the embodiments but by the scope of claims for patent, and all modifications or modified examples within the meaning and scope equivalent to the scope of claims for patent are further included.

### First Modified Embodiment

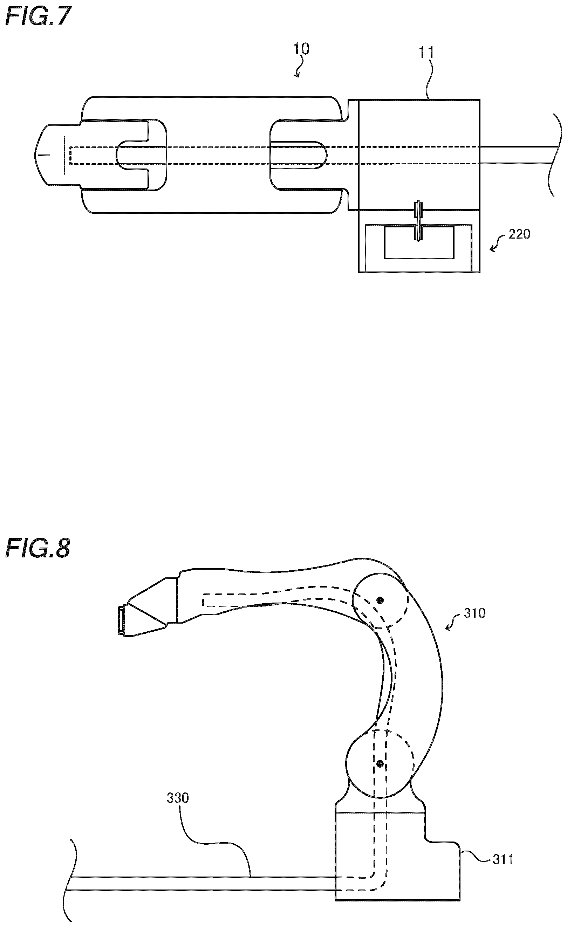

While the example in which the upward/downward mover 20 is arranged on a side opposite to the lower arm part 12 with respect to the base part 11, and the tube 30 linearly passes through the base part 11 from one side to another side of the base part has been shown in the aforementioned embodiment, the present disclosure is not limited to this. In the present disclosure, alternatively, an upward/downward mover 220 can be arranged on a lateral side of the base part 11 as shown in a first modified embodiment of FIG. 7. That is, the upward/downward mover 220 can be arranged at a position offset in a direction intersecting a direction in which the robot arm 10 is arranged with respect to the base part 11. In this case, the tube can linearly extend from one side to another side of the base part 11, or the tube can be curved in a direction in which the upward/downward mover 220 is positioned. Also, even in a case in which the upward/downward mover is arranged on a side opposite to the lower arm part with respect to the base part, the tube does not necessarily linearly pass through the base part but can be curved. Also, the tube can extend from a position away from the upward/downward mover to the robot arm.

### Second Modified Embodiment

While the example in which the robot includes the upward/downward mover 20 that moves the robot arm 10 upward/downward has been shown in the aforementioned embodiment, the present disclosure is not limited to this. In the present disclosure, the robot does not necessarily include the upward/downward mover. For example, alternatively, as in a robot arm 310 according to a second modified embodiment shown in FIG. 8, a base part 311 of the robot arm 310 can be directly installed on a mount or an installation surface without the upward/downward mover. In this arrangement, a tube 330 can be curved to extend toward a lateral side of the base part 311, or linearly pass through the base from one side to another side.

### Other Modified Embodiments

While the example in which the joint 42 and 43 as the predetermined joints include tube-receiving areas 42c and 43c including positions that overlap the centers of the rotation axes as viewed in the extension directions of the rotation axes has been shown in the aforementioned embodiment, the present disclosure is not limited to this. In the present disclosure, alternatively, the tube-receiving area in which the tube is arranged does not necessarily include a position that overlaps the center of the rotation axis as viewed in the extension direction of the rotation axis. That is, a position of the tube can be deviated from the center of rotation axis as viewed in the extension direction of the rotation axis.

While the example in which the tube 30 is arranged between the connectors 42a and 42b formed by connecting the U-shaped end parts 11d and 12b of the links 11b and 12a in the joint 42 as the predetermined joint, the tube 30 is arranged between the connectors 43a and 43b formed by connecting the U-shaped end parts 12c and 13b of the links 12a and 13a in the joint 43 as the predetermined joint has been shown in the aforementioned embodiment, the present disclosure is not limited to this. In the present disclosure, alternatively, the predetermined joint does not necessarily include a pair of connectors. For example, the predetermined joint can be a furcated joint including one connector. Also, the link in the predetermined joint does not necessarily include U-shaped end parts. For example, the link can have a hollow columnar shape.

While the example in which the tube 30 is arranged in the interior of the robot arm 10 in the width direction by forming the recessed part 12d and the recessed part 13c in the lower arm part 12 and the upper arm part 13 of the robot arm 10, respectively has been shown in the aforementioned embodiment, the present disclosure is not limited to this. In the present disclosure, alternatively, the tube can be arranged on an exterior side of the exterior shape of the robot arm in the width direction in a part of the robot arm. In this arrangement, the width direction of the robot arm can be a direction orthogonal to the extension direction of the robot arm, and parallel to the rotation axis of each of the plurality of joints arranged in the robot arm or orthogonal to the rotation axis. Also, the robot arm does not necessarily include recessed parts opened downward. Also, the robot arm can include recessed parts opened upward. Also, the robot arm can include recessed parts as grooves having not U shapes but V shapes as viewed in a cross section. Also, the robot arm can include not recessed parts but L-shaped guides having walls on only one side of the robot arm.

While the example in which the robot 100 includes the plurality of tubes 30 including both the electric cables and the fluid hoses has been shown in the aforementioned embodiment, the present disclosure is not limited to this. In the present disclosure, alternatively, the robot can include tubes including only the electric cables or the fluid hoses. Also, the robot can include not the plurality of tubes but only one tube.

While the example in which the robot arm 10 is a 6-axis vertical multi-joint robot arm including the base part 11, the lower arm part 12 and the upper arm part 13 and the wrist 14, and the joints 42 and 43 as the predetermined joints are arranged adjacent to each other in both end parts of the lower arm part 12 has been shown in the aforementioned embodiment, the present disclosure is not limited to this. In the present disclosure, alternatively, the robot arm can be not the 6-axis multi-joint robot including six joints but a multi-joint robot including not greater than five or not smaller than seven joints. The number of joints and the orientation arrangement of the robot arm are not limited to the aforementioned embodiment. For example, an orientation of the rotation axis of the joint in the base can be different from the aforementioned embodiment. Also, the wrist can have a configuration different from the aforementioned embodiment. Also, the upper arm can include not one link but a plurality of links and a plurality of joints. For example, the upper arm can include a joint that rotates about a rotation axis parallel to the extension direction of the upper arm. Also, the predetermined joints can be joints other than joint in the both end parts of the lower arm.

While the example in which the lower arm part 12 has an arch shape has been shown in the aforementioned embodiment, the present disclosure is not limited to this. In the present disclosure, alternatively, the lower arm can have a linear extension shape.

While the example in which the upward/downward mover 20 includes a pair of counterweights 21 and 22 connected to the robot arm 10 by wires 23 and 24 has been shown in the aforementioned embodiment, the present disclosure is not limited to this. In the present disclosure, alternatively, the upward/downward mover can include one counterweight, or not smaller than three counterweights, or no counterweight can be provided. Also, in a case in which a counterweight is provided, the counterweight can be connected to the robot arm by a fastener without using the wire.

While the example in which the robot arm 10 has a distal end part to which a painting gun 101 is attached as an end effector has been shown in the aforementioned embodiment, the present disclosure is not limited to this. In the present disclosure, alternatively, a welding torch can be attached to the distal end of the robot arm as the end effector. Also, a processing tool for cutting, grinding, cutting-out, or the like can be attached to the distal end of the robot arm as the end effector, or a hand for holding a workpiece to be conveyed can be attached to the distal end of the robot arm as the end effector. The robot is not limited to an industrial robot but can be a medical robot.

While the example in which the controller 51 includes a main CPU and a servo CPU has been shown in the aforementioned embodiment, the present disclosure is not limited to this. In the present disclosure, alternatively, a single arithmetic unit such as a CPU can control the operation of the robot.

### Modes

The aforementioned exemplary embodiment will be understood as concrete examples of the following modes by those skilled in the art.

### (Mode 1)

A robot according to mode 1 includes a vertical multi-joint robot arm including a plurality of joints each of which rotates about a rotation axis; and a tube overlapping a circular area(s) in at least one of the plurality of joints as a predetermined joint(s) that centers/center the rotation axis/axes of the predetermined joint(s) and has/have a radius(radii) of a distance(s) between the rotation axis/axes of the predetermined joint(s) and an exterior surface(s) of the predetermined joint(s) as viewed in an extension direction(s) of the rotation axis/axes, arranged inside an exterior shape(s) of the predetermined joint(s) as viewed in a direction orthogonal to the rotation axis/axes of the predetermined joint(s), and including at least one of an electric cable and a fluid hose.

### (Mode 2)

In the robot according to mode 1, the predetermined joint(s) includes/include a tube-receiving area(s) including a position(s) that overlaps/overlap the center(s) of the rotation axis/axes as viewed in the extension direction(s) of the rotation axis/axes and being caused to receive the tube by operation of the robot arm inside the exterior shape(s) of the predetermined joint(s) as viewed in the direction orthogonal to the rotation axis/axes of the predetermined joint(s).

### (Mode 3)

In the robot according to mode 1 or 2, the predetermined joint(s) includes/include a pair(s) of connectors facing each other in a direction(s) of the rotation axis/axes of the predetermined joint(s); and the tube is arranged between the pair(s) of connectors in the predetermined joint(s).

### (Mode 4)

In the robot according to mode 3, the robot arm includes a pair(s) of links including forked end parts each of which has a U shape; and the predetermined joint(s) includes/include the pair(s) of connectors, which face each other in a direction(s) of the rotation axis/axes of the predetermined joint(s), are formed by connecting the U-shaped end parts of the pair(s) of links.

### (Mode 5)

In the robot according to any of modes 1 to 4, the tube is arranged in an interior of the robot arm in a width direction in at least a part of the robot arm.

### (Mode 6)

In the robot according to any of modes 1 to 5, a plurality of tubes are provided as the tube; and the robot further comprises a tie that bundles the plurality of tubes.

### (Mode 7)

In the robot according to any of modes 1 to 6, the predetermined joints include one pair of predetermined joints that are adjacent to each other in the plurality of joints; and the tube overlaps the circular areas in the one pair of predetermined joints, which are adjacent to each other, as viewed in the extension directions of the rotation axes, and is arranged inside the exterior shapes of the predetermined joints as viewed in the direction orthogonal to the rotation axes of the predetermined joints.

### (Mode 8)

In the robot according to mode 7, the robot arm includes a lower arm part arranged in a proximal end part of the robot arm, and an upper arm part connected to the lower arm part and arranged in a distal end part of the robot arm; and the predetermined joints are the joints that are arranged in both end parts of the lower arm part in the plurality of joints.

### (Mode 9)

In the robot according to mode 8, the lower arm part has a curved arch shape; and the tube passes through the predetermined joints, which are arranged in the both end parts of the lower arm part having the curved arch shape.

### (Mode 10)

In the robot according to any of modes 1 to 9, the robot arm includes a/the lower arm part arranged in a/the proximal end part of the robot arm, an/the upper arm part connected to the lower arm part and arranged in a/the distal end part of the robot arm, and a base part connected to a proximal end part of the lower arm part opposite to the upper arm part; and the tube linearly passes through the base part from one side to another side of the base part.

### (Mode 11)

In the robot according to any of modes 1 to 10, an upward/downward mover that moves the robot arm upward/downward is further provided, wherein the upward/downward mover is arranged in a/the proximal end part of the robot arm; and the tube extends from the proximal end part of the robot arm, which is a common part to the upward/downward mover, along the robot arm.

### (Mode 12)

In the robot according to any of modes 1 to 11, an/the upward/downward mover that moves the robot arm upward/downward is further provided, the upward/downward mover includes a counterweight connected to the robot arm by a wire(s).

### (Mode 13)

In the robot according to mode 11, the robot arm includes a/the lower arm part arranged in a/the proximal end part of the robot arm, an/the upper arm part connected to the lower arm part and arranged in a/the distal end part of the robot arm, and a base part connected to a proximal end part of the lower arm part opposite to the upper arm part, and is orientated in a direction orthogonal to an upward/downward movement direction of the upward/downward mover; and the upward/downward mover is arranged on a side opposite to the lower arm part with respect to the base part.

### (Mode 14)

In the robot according to mode 13, the upward/downward mover includes a pair of counterweights connected to the robot arm by wires; and the tube is arranged between the pair of counterweights, and extends from the upward/downward mover to the robot arm.

### (Mode 15)

In the robot according to any of modes 1 to 14, the robot arm has a distal end to which a painting gun for spraying paint is attached as an end effector; and the tube includes a painting hose as the fluid hose for supplying the paint to the painting gun.

## Claims

1. A robot (100) comprising:
a vertical multi-joint robot arm (10) including a plurality of joints (41, 42, 43, 44, 45, 46) each of which rotates about a rotation axis; and
a tube (30) overlapping a circular area(s) (42r, 43r) in at least one of the plurality of joints (41, 42, 43, 44, 45, 46) as a predetermined joint(s) (42, 43) that centers/center the rotation axis/axes of the predetermined joint(s) and has/have a radius(radii) of a distance(s) between the rotation axis/axes of the predetermined joint(s) and an exterior surface(s) of the predetermined joint(s) (42, 43) as viewed in an extension direction(s) of the rotation axis/axes, arranged inside an exterior shape(s) of the predetermined joint(s) (42, 43) as viewed in a direction orthogonal to the rotation axis/axes of the predetermined joint(s), and including at least one of an electric cable and a fluid hose.

2. The robot according to claim 1, wherein the predetermined joint(s) (42, 43) includes/include a tube-receiving area(s) (42c, 43c) including a position(s) that overlaps/overlap the center(s) of the rotation axis/axes as viewed in the extension direction(s) of the rotation axis/axes and being caused to receive the tube (30) by operation of the robot arm (10) inside the exterior shape(s) of the predetermined joint(s) (42, 43) as viewed in the direction orthogonal to the rotation axis/axes of the predetermined joint(s).

3. The robot according to claim 1 or 2, wherein
the predetermined joint(s) (42, 43) includes/include a pair(s) of connectors (42a and 42b; 43a and 43b) facing each other in a direction(s) of the rotation axis/axes of the predetermined joint(s); and
the tube (30) is arranged between the pair(s) of connectors (42a and 42b; 43a and 43b) in the predetermined joint(s) (42, 43).

4. The robot according to claim 3, wherein
the robot arm (10) includes a pair(s) of links (11b and 12a; 12a and 13a) including forked end parts (11d and 12b; 12c and 13b) each of which has a U shape; and
the predetermined joint(s) (42, 43) includes/include the pair(s) of connectors (42a and 42b; 43a and 43b), which face each other in a direction(s) of the rotation axis/axes of the predetermined joint(s), are formed by connecting the U-shaped end parts (11d and 12b; 12c and 13b) of the pair(s) of links (11b and 12a; 12a and 13a).

5. The robot according to any of claims 1 to 4, wherein the tube (30) is arranged in an interior of the robot arm (10) in a width direction in at least a part of the robot arm (10).

6. The robot according to any of claims 1 to 5, wherein
a plurality of tubes (30) are provided as the tube (30); and
the robot further comprises a tie (31) that bundles the plurality of tubes (30).

7. The robot according to any of claims 1 to 6, wherein
the predetermined joints (42, 43) include one pair of predetermined joints (42, 43) that are adjacent to each other in the plurality of joints (41, 42, 43, 44, 45, 46); and
the tube (30) overlaps the circular areas (42r, 43r) in the one pair of predetermined joints (42, 43), which are adjacent to each other, as viewed in the extension directions of the rotation axes, and is arranged inside the exterior shapes of the predetermined joints (42, 43) as viewed in the direction orthogonal to the rotation axes of the predetermined joints.

8. The robot according to claim 7, wherein
the robot arm (10) includes a lower arm part (12) arranged in a proximal end part of the robot arm, and an upper arm part (13) connected to the lower arm part (12) and arranged in a distal end part of the robot arm; and
the predetermined joints (42, 43) are the joints that are arranged in both end parts of the lower arm part (12) in the plurality of joints (41, 42, 43, 44, 45, 46).

9. The robot according to claim 8, wherein
the lower arm part (12) has a curved arch shape; and
the tube (30) passes through the predetermined joints (42, 43), which are arranged in the both end parts of the lower arm part (12) having the curved arch shape.

10. The robot according to any of claims 1 to 9, wherein
the robot arm (10) includes a/the lower arm part (12) arranged in a/the proximal end part of the robot arm, an/the upper arm part (13) connected to the lower arm part (12) and arranged in a/the distal end part of the robot arm, and a base part (11) connected to a proximal end part of the lower arm part (12) opposite to the upper arm part (13); and
the tube (30) linearly passes through the base part (11) from one side to another side of the base part.

11. The robot according to any of claims 1 to 10 further comprising
an upward/downward mover (20) that moves the robot arm (10) upward/downward, wherein
the upward/downward mover (20) is arranged in a/the proximal end part of the robot arm (10); and
the tube (30) extends from the proximal end part of the robot arm (10), which is a common part to the upward/downward mover (20), along the robot arm (10).

12. The robot according to any of claims 1 to 11 further comprising
an/the upward/downward mover (20) that moves the robot arm (10) upward/downward, wherein
the upward/downward mover (20) includes a counterweight (21, 22) connected to the robot arm (10) by a wire(s) (23, 24).

13. The robot according to claim 11, wherein
the robot arm (10)
includes a/the lower arm part (12) arranged in a/the proximal end part of the robot arm, an/the upper arm part (13) connected to the lower arm part (12) and arranged in a/the distal end part of the robot arm, and a base part (11) connected to a proximal end part of the lower arm part (12) opposite to the upper arm part (13), and
is orientated in a direction orthogonal to an upward/downward movement direction of the upward/downward mover (20); and
the upward/downward mover (20) is arranged on a side opposite to the lower arm part (12) with respect to the base part (11).

14. The robot according to claim 13, wherein
the upward/downward mover (20) includes a pair of counterweights (21, 22) connected to the robot arm (10) by wires (23, 24); and
the tube (30) is arranged between the pair of counterweights (21, 22), and extends from the upward/downward mover (20) to the robot arm (10).

15. The robot according to any of claims 1 to 14, wherein
the robot arm (10) has a distal end to which a painting gun (101) for spraying paint is attached as an end effector; and
the tube (30) includes a painting hose as the fluid hose for supplying the paint to the painting gun (101).
